# EUROPEAN PATENT SPECIFICATION

(11) **EP 1 641 716 B1**
(45) Date of publication and mention of the grant of the patent: **14.02.2007**
(21) Application number: 04742235.7
(22) Date of filing: 08.06.2004
(51) Int. Cl.: C03B 23/03, C03B 35/20

(54) **APPARATUS FOR BENDING GLASS PANELS**
VORRICHTUNG ZUM BIEGEN VON GLASSCHEIBEN
APPAREIL DE CINTRAGE DE PANNEAUX DE VERRE

(30) Priority: 25.06.2003 FI 20035107
(43) Date of publication of application: 05.04.2006
(73) Proprietor: Tamglass Ltd. Oy, 33730 Tampere (FI)
(72) Inventor: YLI-VAKKURI, Erkki, CH-2074 Marin-Epagnier (CH); KOIVISTO, Heikki, FI-33710 Tampere (FI)
(74) Representative: LEITZINGER OY
(86) International application number: PCT/FI2004/050085
(87) International publication number: WO 2004/113240

(56) References cited:
- EP-A2- 1 236 692
- US-A- 5 147 440
- US-A- 5 364 436

## Description

The invention relates to an apparatus for bending glass panels, said apparatus comprising
- an upper mould carriage track with successive mould carriages whose front or rear wall separates successive heating compartments and several successive bending compartments from each other, the mould carriages being adapted for an intermittent conveyance towards a press-bending compartment having its ceiling provided with a descendable and ascendable male mould;
- a lower mould carriage track with successive mould carriages whose rear or front wall separates successive cooling compartments from each other, the mould carriages being adapted for an intermittent conveyance in a direction opposite to the conveying direction of the mould carriages present on the upper mould carriage track;
- a number of bending moulds supported by the mould carriages;
- preheating compartments present in the upstream end of the upper mould carriage track, in which the heating of glass panels is effected by means of forced convection for which thermal energy has been obtained from glass panels presently annealing in downstream end compartments of the lower mould carriage track;
- radiation heating means on the ceiling of preheating compartments at least in some of the preheating compartments;
- radiation heating means on the ceiling of gravitationally working bending compartments;
- an intermediate floor which separates the bending compartments and preheating compartments from compartments therebelow;
- a lift mechanism for lowering the mould carriages from the upper track onto the lower track together with bent glass panels;
the mould carriages being provided with an open-structured or otherwise highly heat transmissive bottom.

This type of apparatus is known from the Applicant's patent publications US-A-4,497,645 and US-A-4,986,842, which nevertheless disclose no press-bending compartment. Such an apparatus has proved particularly useful in the process of bending pairs of superimposed glass panels to be subsequently joined by lamination for use e.g. as an automotive windshield. In the early stages of preheating, it is possible to make effective use of heat delivered by glass panels presently annealing in cooling compartments for warming up glass panels to be heated in heating compartments. In the final preheating compartments, this possibility no longer exists as the temperature difference between a pair of glass panels to be heated in a heating compartment and a pair of glass panels presently annealing therebelow remains small. This is why the Applicant has already proposed in Patent publication US-5,902,367 that, after a bending process, the mould carriage be passed underneath the pre-bending compartments directly to its position below the final preheating compartment. However, this arrangement does not provide controlled cooling immediately after a bending process for establishing a sufficient edge stress.

On the other hand, there is a multitude of prior known devices, in which the final stages of a bending process are based on press-bending performed by a male mould. However, these have not made use of a light-structured, open-bottomed carriage, which enables the recovery of heat from annealing glasses.

It is an object of the invention to provide an improved apparatus, wherein press-bending is possible with a light-structured hinge mould typically used in gravitational bending in addition to which, by virtue of a light-structured and open-bottomed carriage, the thermal energy delivered by glass panels in the process of annealing can be effectively exploited for warming up glass panels to be heated on the upper track.

This object is accomplished by the invention as defined in the appended claim 1. The dependent claims disclose preferred embodiments of the invention.

One exemplary embodiment of the invention will now be described in more detail with reference to the accompanying drawings, in which
- Fig. 1: shows the upstream end of an upper track and the downstream end of a lower track in an apparatus of the invention;
- Fig. 2: shows the middle section of an upper track and the middle section of a lower track in an apparatus of the invention;
- Fig. 3: shows the downstream end of an upper track and the upstream end of a lower track in an apparatus of the invention, the sections of figs. 1, 2, and 3 in succession making up the entire apparatus;
- Fig. 4: shows a bending compartment 4b in cross-section;
- Fig. 5: shows the bending compartment 4b in a direction indicated by an arrow V in fig. 4;
- Fig. 5A: shows a partial cross-section taken from fig. 5; and
- Fig. 6: shows in a schematic perspective view a mould carriage for use in the apparatus.

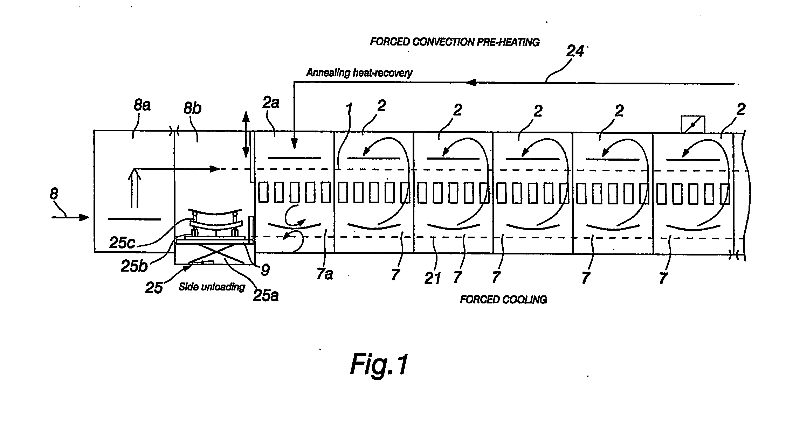

The apparatus shown in figs. 1-3 comprises an upper mould carriage track 1 with successive mould carriages 9 whose front or rear wall 11 separates successive preheating compartments 2, 3 and several successive bending compartments 4a, 4b from each other. The mould carriages are adapted for an intermittent conveyance towards the final bending compartment 4b having its ceiling provided with a descendable and ascendable male mould 22. A lower mould carriage track 21 carries successive mould carriages 9 lying underneath those of the upper track 1. The mould carriages 9 of the lower mould carriage track 21 have a rear or front wall 11 thereof separating successive cooling compartments 5, 6, 7 from each other. The mould carriages 9 of the lower track 21 are adapted for an intermittent conveyance In a direction opposite to the conveying direction of the mould carriages present on the upper mould carriage track.

Each of the mould carriages 9 is provided with a bending mould 12 supported by the mould carriage 9. A pair of glass panels is laid on the bending mould 12 while the mould carriage 9 is located outside the furnace in a loading and unloading compartment 8. The carriage 9, the mould 12, and the pair of glass panels for subsequent bending are hoisted by a lift present in a compartment 8a downstream of the loading and unloading compartment 8 onto the upper track 1, wherein the mould carriages are conveyed intermittently across a distance substantially equal to the carriage length at a time towards the bending compartment 4b. First along this passage are preheating compartments 2, wherein heating is based on forced convection for which thermal energy is obtained from glass panels presently annealing by forced convection in cooling compartments 7 underneath. Thus, the cooling compartments 7 can be used for speeding up the annealing of subsequently cooled glass panels and the heating compartments 2 can be used for speeding up the heating of subsequently heated glass panels, while enabling a more effective exploitation of thermal energy from glass panels to be cooled. The design and function of the compartments 2 and 7 are explained more fully in the Applicant's patent publication US-4,986,842. A difference here is that the first preheating compartment 2a is supplied with hot air by way of a duct 24 from cooling compartments 5 at the upstream end of the lower track, each of which is separately provided with a controlled circulation of cooling air by means of exhaust fans 23. Since the compartments 5 are provided with an individually regulable cooling air circulation, a glass panel can be cooled in a controlled fashion and a sufficiently high edge stress can be established.

From the compartments 2, the upper tier carriages 9 advance into preheating compartments 3, wherein the principal heating of glass panels is effected by radiation heating. Therefore the compartments 3 have their ceilings provided with electrically heated radiation heating resistances 13. The compartments 3 include a thermally insulated bottom 15a, which constitutes an intermediate floor between the upper track compartments 3 and lower track compartments 6. This intermediate floor 15a is topped with radiation heating elements 16 set below the level of the carriages' 9 bottom 10. The radiation heating elements 16 apply heating to the bottom one of a pair of glass panels present in the compartments 3 through the open-structured bottom 10 of the carriage 9. The bottom 10 need not be fully open-structured, but it can be partially closed, e.g. with a thin perforated plate, a screen or the like, which is transmissive both to convection air in the preceding compartments 2 and to radiation heat from the heating elements 16.

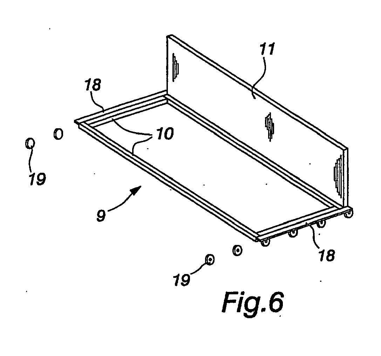

Fig. 6 illustrates runners 18 present at the ends of the carriage's 9 bottom frame 10, by which the carriages 9 are supported on rollers 19 mounted with bearings on furnace side walls 17 (fig. 7) and thereby constituting the upper track 1 and the lower track 21.

The final preheating compartment 3a is followed by a number of pre-bending compartments 4a, in which the temperature of a pair of glass panels rises to such a degree that the pair of glass panels begins to sag upon a ring mould 12 supporting it. The number of pre-bending compartments 4a is sufficient for attaining in the final pre-bending compartment 4a with gravitational bending a final bending form, if the question is about simple bending forms, and an almost final bending form, if the question is about complicated bending forms. In the latter case, the bending finish is performed by an ascendable and descendable male mould 22 present in a bending compartment 4b for pressing the finished form. The mould 22 is maintained at a sufficiently high temperature by means of resistances 14b.

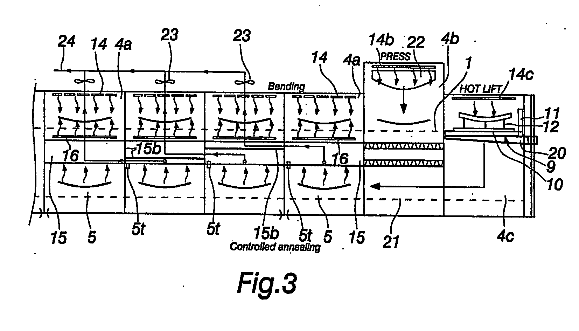

Between the compartments 4a and the underlying cooling compartments 5 is an intermediate floor 15, which is formed by sectioning with a duct system for the circulation of cooling air. At three successive cooling compartments 5, alongside the intermediate floor 15, there is a cooling air inlet port, which can be of a constant size or mechanically adjustable for its size. The intermediate floors 15 are provided with intermediate plates 15b for providing the intermediate floors 15 with several successive and separate flow boxes for cooling air, the flow of cooling air therethrough being individually controllable. It can be seen from fig. 3 that on top of four compartments 5 there will be three successive annealing zones, each having its own individual exhaust fan 23. The blowing performance of each fan 23 is adjustable with an inverter. The cooling compartments 5 may have their bottoms underneath the glass provided with meandering cooling pipe systems, the fans propelling cooling air therein from the opposite sides of the compartments 5. The air warmed up in cooling pipe systems is passed by way of pipes to a heat recovery between the compartments 7/2.

The bottom surfaces of the intermediate floors 15 provided with cooling air flow boxes, i.e. the bulkheads of the respective cooling compartments 5, are provided with thermoelements 5t for measuring temperatures of the glasses and regulating individually the operation of the cooling air exhaust fans 23. The intermediate floors' 15 bottom surfaces, i.e. the cooling compartments' bulkheads, are preferably made of corrugated sheet metal for a larger cooling area.

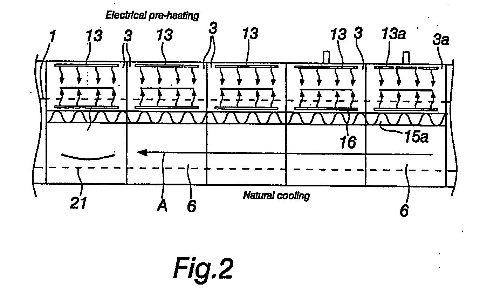

After the cooling compartments 5, the mould carriages 9 are adapted to be conveyed underneath several preheating compartments 3a, 3 past compartments 6 nonstop by a single passage as shown by an arrow A in fig. 2. During this passage occurs a slight amount of natural cooling on the way to compartments 7, in which cooling is enhanced by forced convection.

Cooled glass panels are unloaded from the compartment 8b sideways. Therefor the compartment 8b is provided with a lifting device 25 whose cylinders 25b, being supported by an articulated jack 25a, lift a glass panel on props 25c up from the mould. Subsequently, the glass panel can be picked up from top of the props 25c by a sideways moving cradle (not shown).

As conventional, the resistances 14 present at the ceiling of the bending compartments 4a comprise resistances lengthwise of the furnace, which are divided into several successive groups in the longitudinal direction of the furnace. Each group comprises in the lateral direction of the furnace a large number of resistances side by side, which can be optionally switched on and off. Regulation of a resistance panel in the bending compartment has been described in more detail in the Applicant's patent publication US-5,470,367.

If a pair of glass panels bends to a desired form (simple bending forms) as early as in the final gravitational bending compartment 4a, it will be transferred directly through the press-bending compartment 4b into a lift compartment 4c. If necessary (with more complex bending forms), a press-bending process is performed in the compartment 4b with a press mould 22, followed by passing the carriage 9 into the lift compartment 4c, in which the carriage 9 is lowered by means of a lift mechanism 20 from the upper track 1 onto the lower track 21. At this point, the cooling of a pair of glass panels is still inhibited with radiation heating resistances 14c in order to commence controlled annealing in the first cooling compartment 5.

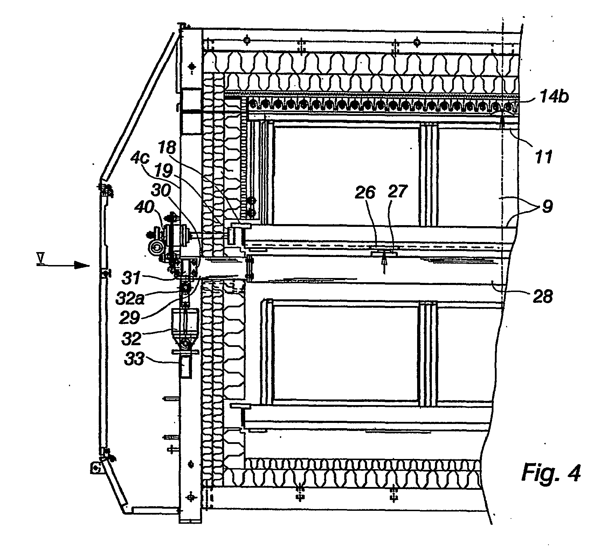

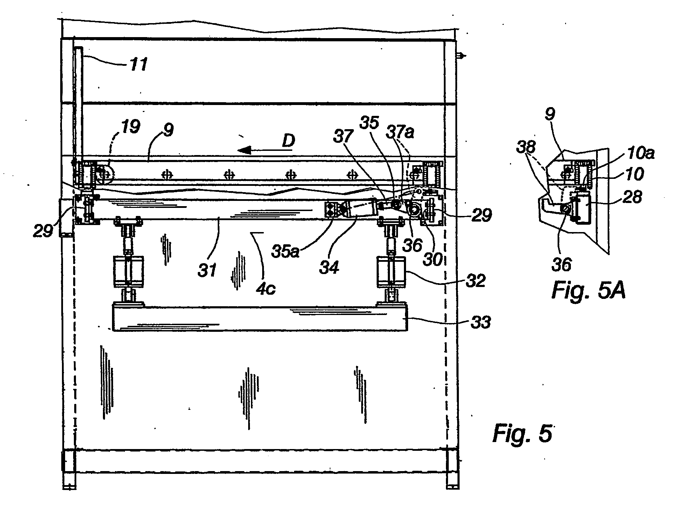

In order to enable press-bending in the first place with a light-structured hinge mould, which is typically used in gravitational bending and which is supported on the light-structured carriage 9, it has been discovered in the invention to support the carriage 9 on girders 28 provided in connection with the bending compartment's 4b bottom. As depicted in figs. 4, 5, and 5A, this has been realized in such a way that the carriage's 9 bottom is fitted with bearer elements 26 for the carriage 9, e.g. flat bars, the girders 28 arranged in connection with the compartment 4b being provided at matching locations with brace elements 27 for bracing the flat bearer bars 26 during a press-bending process. The flat bars 26 can be replaced with other shapes of bearer elements, such as rods or tubes or truss structures with more than one element. The number of brace elements 27 and flat bearer bars 26 is e.g. four of each, fitted under the mould 12 at the best points for supporting it. What is essential about this apparatus is that the brace elements 27 can be lifted and lowered to enable them to support the flat bearer bars 26 or to release them from the supporting engagement in view of making the carriage 9 movable along the track 1.

Therefore the girders 28, the number of which is preferably two, are fitted laterally in a bending compartment 4b so as to leave them beneath a parked carriage 9. The bending compartment 4b can have its bottom (not shown) constructed to rest upon the girders 28. Visible in figs. 4 and 5 are mechanisms for enabling a vertical movement for the girders 28. Figs. 4 and 5 illustrate one side of the bending compartment 4b, but a matching configuration can be applied on the opposite side. In this embodiment, both ends of the two girders 28 have extensions in the form of flanges 29. The flanges 29 have their ends extending from the bending compartment 4b through a side wall and spaced from each other regarding the portion thereof outside the wall. Between two successive flanges 29 is fitted an elongated beam 31 lengthwise of the furnace. This lengthwise beam 31 is coupled to the out-of-watt portions of the flange 29 by way of complementary flanges 30 included in the beam 31. As a result, said two girders 28 and the lengthwise beams 31 coupled to both ends thereof and present outside the bending compartment 4b constitute a movable frame structure. The frame, and hence the girders 28, can be preferably manipulated by means of power units 32, such as cylinders 32, bearing against the beams 31 from outside the bending compartment 4b. The cylinders 32, the number of which preferably provided for each beam 31 being two, are secured to a base member 33 adapted to be immobile relative to the outer wall.

Thus, during a press-bending operation, the cylinders 32 transmit the force of the brace elements 27, which lightens the bracing engagement between the runners 18 included in the carriage 9 and the rollers 19. It is also possible that the carriage 9 be subjected to a force capable of lifting the carriage 9 from top of the rollers 19, such that the carriage 9 is entirely supported on the brace elements 27. The carriage 9 can be lifted to a height of 1-10 mm, preferably to a height of about 5 mm. In addition to this, it is conceivable that press-bending be effected from below against a male mould by lifting the carriage 9. In this case, the press force is controlled by means of the cylinders 32. A sufficiently short lifting distance is obtained as the male mould 22 is lowered as close as possible to the glass to be bent. It is further possible to effect the initial bending by lowering the male mould and to finish the bending by lifting the carriage 9.

The girder 28 undergoes a thermal expansion inside the furnace, which results in alteration of the girder's 28 length and thereby application of lateral forces via the beam 31 on the cylinder's 32 piston rod. Therefor the cylinder's 32 piston rod is provided with an articulation 32a, the function of which is to allow a thermal-expansion induced movement of the beam 31 and thereby to compensate for the above-mentioned lateral forces.

In connection with the frame structure are also provided parking means for the carriage 9. The parking means include a claw member 38, which is positioned in connection with the girder 28 present in the upstream section of the bending compartment 4b. The parking means further include pivoting elements 34, 35, 36, 37 for the claw member 38. The pivoting elements include a link axle 36, which is adapted for rotation about its longitudinal axis and which has the claw member 38 mounted on its first end extending to the interior of the furnace. The link axle 36 has its longitudinal axis extending in a direction which is substantially transverse to the track direction and is positioned beneath the parked carriage 9. The link axle 36 has its second end extending outside of the furnace wall. The link axle 36 has its second end fitted with actuators 34, 35, 37 for turning the link axle 36 and thereby the claw member 38 between a position parking the carriage 9 and a position releasing the carriage.

The actuators according to the present embodiment include a cylinder 34, which has its piston rod 37, 37a folding by means of articulations 35, 35a, and 36 provided in the piston 34 and the piston rod, such that a movement of the piston rod results in the above-mentioned rotation of the claw member 38 about its longitudinal axis. The position of the piston rod 37, 37a and a respective position of the claw member 38 are visualised in figs. 5 and 5a. The piston rod 37a indicated by a solid line corresponds to a position of the claw member 38 indicated by a solid line (a carriage releasing position). The piston rod 37a indicated by a dashed line corresponds to a position of the claw member 38 indicated by a dashed line (a carriage parking position). A piston-rod equipped actuator is highly resistant to torque. The conceivable actuators include a reversible cylinder, a solenoid or the like mounted directly on the link axle 36. It can be seen from fig. 5A that the carriage 9 has the rear portion of its body 10 provided with a matching piece 10a, the claw member 38 pivoted for parking being braced against said piece to park the carriage 9 accurately for final bending.

## Claims

1. An apparatus for bending glass panels, said apparatus comprising
- an upper mould carriage track (1) with successive mould carriages (9) whose front or rear wall (11) separates successive heating compartments (2, 3) and several successive bending compartments (4a, 4b) from each other, the mould carriages (9) being adapted for an intermittent conveyance towards a press-bending compartment (4b) having its ceiling provided with a descendable and ascendable male mould (22);
- a lower mould carriage track (21) with successive mould carriages (9) whose rear or front wall (11) separates successive cooling compartments (5, 6, 7) from each other, the mould carriages being adapted for an intermittent conveyance in a direction opposite to the conveying direction of the mould carriages present on the upper mould carriage track;
- a number of bending moulds (12) supported by the mould carriages (9);
- preheating compartments (2) present in the upstream end of the upper mould carriage track (1), in which the heating of glass panels is effected by means of forced convection for which thermal energy has been obtained from glass panels presently annealing in downstream end compartments (7) of the lower mould carriage track;
- radiation heating means (13) on the ceiling of preheating compartments (3) at least in some of the preheating compartments;
- radiation heating means (14) on the ceiling of gravitationally working bending compartments (4a);
- an intermediate floor (15a, 15) which separates the bending compartments (4a) and preheating compartments (3, 3a) from compartments (5, 6) therebelow;
- a lift mechanism (20) for lowering the mould carriages (9) from the upper track (1) onto the lower track (21) together with bent glass panels;
the mould carriages (9) being provided with an open-structured or otherwise highly heat transmissive bottom (10), wherein the mould supporting carriage (9) has its bottom fitted with bearer elements (26) and the press-bending compartment (4b) has its lower section fitted with brace elements (27) for the mould carriage (9), which provide bracing for the bearer elements (26) during a press-bending operation performed by means of the male mould (22), and in connection with the brace elements (27) lifting and lowering mechanisms for the brace elements (27) are provided, which comprise
- a frame (28, 29, 30, 31), which has the brace elements (27) arranged in connection therewith and which extends partly beyond the press-bending compartment's (4b) walls;
- power units (32), which are arranged in connection with a frame portion (31) remaining outside the press-bending compartment's (4b) wall and by which the frame (28, 29, 30, 31) is ascendable and descendable.

2. An apparatus as set forth in claim 1, **characterized in that** the lifting and lowering mechanism for the brace elements (27) comprises pneumatic or hydraulic cylinders (32).

3. An apparatus as set forth in claim 1 or 2, **characterized in that** the mould bearer elements (26) comprise flat bars, rods, tubes or other such beam-like elements fitted to the front and rear edges of the mould carriage's (9) open-structured bottom.

4. An apparatus as set forth in any of the preceding claims 1-3,
**characterized in that** the frame (28, 29, 30, 31) comprises:
- two elongated girders (28), which are disposed at a distance from each other underneath the bearer elements (26) and whose ends are formed with flanges (29) extending beyond side walls (4c) of the press-bending compartment (4b)
- longitudinal beams (31), each of which is fitted rigidly in a lengthwise direction of the furnace between two successive flanges (29).

5. An apparatus as set forth in any of the preceding claims 1-4,
**characterized in that** in connection with the frame (28, 29, 30, 31) are provided positioning elements (34, 35, 37, 38) for the mould carriage (9).

6. An apparatus as set forth in any of claims 1-5, **characterized in that** the arrangement is such that the press-bending operation can be at least partially performed by lifting the frame (28, 29, 30, 31).

## Patentansprüche

1. Vorrichtung zum Biegen von Glasscheiben, die Folgendes umfasst
- eine obere Formwagenbahn (1) mit aufeinander folgenden Formwagen (9), deren Vorder- oder Rückwand (11) aufeinander folgende Heizkammem (2, 3) und mehrere aufeinander folgende Biegekammem (4a, 4b) voneinander trennt, wobei die Formwagen (9) für einen diskontinuierlichen Transport in Richtung einer Pressbiegekammer (4b) eingerichtet sind, deren Decke mit einer absenkbaren und aufwärts bewegbaren Außenform (22) versehen ist;
- eine untere Formwagenbahn (21) mit aufeinander folgenden Formwagen (9), deren Rück- oder Vorderwand (11) aufeinander folgende Kühlkammem (5, 6, 7) voneinander trennt, wobei die Formwagen für einen diskontinuierlichen Transport in einer Richtung entgegengesetzt zur Förderrichtung der auf der oberen Formwagenbahn vorhandenen Formwagen eingerichtet sind;
- eine Anzahl von Biegeformen (12), die durch die Formwagen (9) getragen werden;
- Vorwärmkammem (2), die am stromaufwärts gerichteten Ende der oberen Formwagenbahn (1) vorhanden sind, in denen das Erhitzen von Glasscheiben durch erzwungene Konvektion bewirkt wird, für die thermische Energie aus Glasscheiben erhalten wurde, die momentan in Kammern (7) am stromabwärts gerichteten Ende der unteren Formwagenbahn getempert werden;
- Strahlungsheizungseinrichtungen (13) an der Decke von Vorwärmkammem (3) zumindest in einigen der Vorwärmkammem;
- Strahlungsheizungseinrichtungen (14) an der Decke von unter Schwerkraft arbeitenden Biegekammem (4a);
- einen Zwischenboden (15a, 15), der die Biegekammem (4a) und die Vorwärmkammem (3, 3a) von darunter befindlichen Kammem (5, 6) trennt;
- einen Hubmechanismus (20) zum Absenken der Formwagen (9) von der oberen Bahn (1) auf die untere Bahn (21) zusammen mit gebogenen Glasscheiben;
die Formwagen (9) mit einem Boden (10) in offener Bauart oder anderweitig äußerst wärmedurchlässig vorgesehen sind, wobei der Boden des die Form tragenden Wagens (9) mit Trägerelementen (26) ausgerüstet ist, und der untere Abschnitt der Pressbiegekammer (4b) mit Abstützelementen (27) für den Formwagen (9) ausgerüstet ist, die eine Versteifung für die Trägerelemente (26) während eines durch die Außenform (22) ausgeführten Pressbiegevorgangs bewirken, und in Verbindung mit den Abstützelementen (27) Hebe- und Senkmechanismen für die Abstützelemente (27) vorgesehen sind, die umfassen
- einen Rahmen (28, 29, 30, 31), dessen Abstützelemente (27) in Verbindung damit angeordnet sind und der sich teilweise über die Wände der Pressbiegekammer (4b) hinaus erstreckt;
- Druckzylinder (32), die in Verbindung mit einem außerhalb der Wand der Pressbiegekammer (4b) bleibenden Rahmenteil (31) angeordnet sind, und durch die der Rahmen (28, 29, 30, 31) absenkbar und aufwärts bewegbar ist.

2. Vorrichtung nach Anspruch 1, **dadurch gekennzeichnet, dass** der Hebe- und Absenkmechanismus für die Abstützelemente (27) Pneumatik- oder Hydraulikzylinder (32) umfasst.

3. Vorrichtung nach Anspruch 1 oder 2, **dadurch gekennzeichnet, dass** die Formträgerelemente (26) flache Stäbe, Stangen, Rohre oder andere solche balkenähnliche Elemente umfasst, die an den Vorder- und Hinterkanten des offen strukturierten Bodens des Formwagens (9) eingebaut sind.

4. Vorrichtung nach einem der vorhergehenden Ansprüche 1 bis 3, **dadurch gekennzeichnet, dass** der Rahmen (28, 29, 30, 31) umfasst:
- zwei längliche Träger (28), die in einem Abstand voneinander unterhalb der Trägerelemente (26) angeordnet sind und deren Enden mit Flanschen (29) ausgebildet sind, die sich über Seitenwände (4c) der Pressbiegekammer (4b) hinaus erstrecken;
- Längsträger (31), von denen jeder in einer Längsrichtung des Brennofens zwischen zwei aufeinander folgenden Flanschen (29) fest eingebaut ist.

5. Vorrichtung nach einem der vorhergehenden Ansprüche 1 bis 4, **dadurch gekennzeichnet, dass** in Verbindung mit dem Rahmen (28, 29, 30, 31) Positionierelemente (34, 35, 37, 38) für den Formwagen (9) vorgesehen sind.

6. Vorrichtung nach einem der Ansprüche 1 bis 5, **dadurch gekennzeichnet, dass** die Anordnung derart ist, dass der Pressbiegevorgang zumindest teilweise durch Anheben des Rahmens (28, 29, 30, 31) ausgeführt werden kann.

## Revendications

1. Appareil de cintrage de panneaux de verre, ledit appareil comprenant
- une piste supérieure de chariots de moule (1) comportant des chariots de moule (9) successifs dont une paroi avant ou arrière (11) sépare des compartiments de chauffage (2, 3) successifs et plusieurs compartiments de cintrage (4a, 4b) successifs les uns des autres, les chariots de moule (9) étant adaptés pour un acheminement intermittent vers un compartiment de cintrage à la presse (4b) dont le plafond est prévu avec un moule mâle (22) pouvant descendre et monter ;
- une piste inférieure de chariots de moule (21) comportant des chariots de moule (9) successifs dont une paroi arrière ou avant (11) sépare des compartiments de refroidissement (5, 6, 7) successifs les uns des autres, les chariots de moule étant adaptés pour un acheminement intermittent dans une direction opposée à la direction de transport des chariots de moule présents sur la piste supérieure de chariots de moule ;
- un certain nombre de moules de cintrage (12) supportés par les chariots de moule (9) ;
- des compartiments de préchauffage (2) présents dans l'extrémité amont de la piste supérieure de chariots de moule (1), dans lesquels le chauffage des panneaux de verre est effectué par convection forcée pour laquelle une énergie thermique a été obtenue à partir des panneaux de verre recuisant à présent dans des compartiments d'extrémité aval (7) de la piste inférieure de chariots de moule ;
- des moyens de chauffage par rayonnement (13) sur le plafond des compartiments de préchauffage (3), au moins dans certains des compartiments de préchauffage ;
- des moyens de chauffage par rayonnement (14) sur le plafond des compartiments de cintrage (4a) fonctionnant par gravitation ;
- une aire intermédiaire (15a, 15) qui sépare les compartiments de cintrage (4a) et les compartiments de préchauffage (3, 3a) des compartiments (5, 6) situés au-dessous de ceux-ci ;
- un mécanisme d'ascenseur (20) permettant d'abaisser les chariots de moule (9) de la piste supérieure ((1) sur la piste inférieure (21) ensemble avec les panneaux de verre cintrés ;
les chariots de moule (9) étant prévus avec une partie inférieure de forte transmission de chaleur (10) à structure ouverte ou d'un autre type, dans lequel la partie inférieure du chariot de support de moule (9) est montée avec des éléments porteurs (26), et la partie inférieure du compartiment de cintrage à la presse (4b) est montée avec des éléments de support (27) prévus pour le chariot de moule (9), qui fournissent un support pour les éléments porteurs (26) pendant une opération de cintrage à la presse réalisée au moyen du moule mâle (22), et en liaison avec les éléments de support (27), des mécanismes d'élévation et d'abaissement pour les éléments de support (27) sont fournis, lesquels comprennent
- un châssis (28, 29, 30, 31) dont les éléments de support (27) sont agencés en liaison avec celui-ci et qui s'étend partiellement au-delà des parois du compartiment de cintrage à la presse (4b) ;
- des unités de puissance (32) qui sont agencées en liaison avec une partie de châssis (31) restant à l'extérieur de la paroi du compartiment de cintrage à la presse (4b) et au moyen desquelles le châssis (28, 29, 30, 31) peut monter et descendre.

2. Appareil selon la revendication 1, **caractérisé en ce que** le mécanisme d'élévation et d'abaissement prévu pour les éléments de support (27) comprennent des vérins pneumatiques ou hydrauliques (32).

3. Appareil selon la revendication 1 ou 2, **caractérisé en ce que** les éléments porteurs de moule (26) comprennent des barres plates, des tiges, des tubes, ou d'autres éléments tels que des éléments de type barreaux montés sur les bords avant et arrière de la partie inférieure à structure ouverte du chariot de moule (9).

4. Appareil selon l'une quelconque des revendications précédentes 1 à 3, **caractérisé en ce que** le châssis (28, 29, 30, 31) comprend :
- deux poutrelles allongées (28) qui sont disposées à une certaine distance l'une de l'autre sous les éléments porteurs (26) et dont les extrémités sont formées avec des rebords (29) s'étendant au-delà des parois latérales (4c) du compartiment de cintrage à la presse (4b) ;
- des barreaux longitudinaux (31), chacun desquels est monté de manière rigide dans la direction longitudinale du four entre deux rebords (29) successifs.

5. Appareil selon l'une quelconque des revendications précédentes 1 à 4, **caractérisé en ce que**, en liaison avec le châssis (28, 29, 30, 31), des éléments de positionnement (34, 35, 37, 38) sont prévus pour le chariot de moule (9).

6. Appareil selon l'une quelconque des revendications 1 à 5, **caractérisé en ce que** l'agencement est tel que l'opération de cintrage à la presse peut être réalisée au moins partiellement en soulevant le châssis (28, 29, 30, 31).
